# EUROPÄISCHE PATENTANMELDUNG

(11) **EP 2 596 840 A1**
(43) Veröffentlichungstag der Anmeldung: **29.05.2013**
(21) Anmeldenummer: 12192410.4
(22) Anmeldetag: 13.11.2012
(51) Int. Cl.: A63C 17/01, B62K 3/00

(54) **Waveboard-Roller**

(30) Priorität: 17.11.2011 DE 202011052011 U
(71) Anmelder: Crosshouse 24 Ltd. & Co. KG, 24941 Flensburg (DE)
(72) Erfinder: Kollmann, Uwe, 24976 Handewitt (DE)
(74) Vertreter: Michalski Hüttermann & Partner Patentanwälte

(57) **Zusammenfassung**

Gegenstand der vorliegenden Erfindung ist ein Waveboard-Roller zur Fortbewegung zumindest einer Person in eine Fortbewegungsrichtung (10). Der Waveboard-Roller umfasst eine Standflächeneinheit (14) mit einer Längsachse (16), die in einem Zusammenbauzustand im Wesentlichen parallel zur Fortbewegungsrichtung (10) und in einem Betriebszustand parallel zu einem Boden (12) angeordnet ist. Die Standflächeneinheit weist zumindest eine in der Fortbewegungsrichtung (10) vordere Plattform (18) und zumindest eine in der Fortbewegungsrichtung (10) hintere Plattform (20) auf, wobei die vordere Plattform (18) und die hintere Plattform (20) im Zusammenbauzustand in der Fortbewegungsrichtung (10) beabstandet angeordnet sind.

Ferner umfasst der Waveboard-Roller eine Torsionseinheit (42) mit zumindest einem federelastischen Torsionselement (44; 100) und zumindest einem Koppelelement (52), das zur mechanischen Kopplung des federelastischen Torsionselements (44; 100) mit der hinteren Plattform (20) vorgesehen ist.

Der Waveboard-Roller ist mit einer Lenkstangeneinheit (54) mit einem sich im Wesentlichen quer zur Fortbewegungsrichtung (10) erstreckendem Lenkmittel (58) und mit einer Kopplungseinheit (56) zur mechanischen Kopplung der Lenkstangeneinheit (54) ausgestattet.

Weiterhin weist der Waveboard-Roller eine Laufrolleneinheit (72) auf mit zumindest einer in der Fortbewegungsrichtung (10) vorderen Laufrolle (74), die in einem vorderen Lager (78) der Laufrolleneinheit (72) um eine vordere Laufachse (76) drehbar gelagert ist, und mit zumindest einer in der Fortbewegungsrichtung (10) hinteren Laufrolle (80), die um eine hintere Laufachse (82) drehbar ist.

Der Waveboard-Roller umfasst des Weiteren eine Lagereinheit (84) mit einem ersten hinteren Lager (86) zur Lagerung der hinteren Laufachse (82) und mit einem zweiten hinteren Lager (88), mittels dessen die hintere Laufrolle (80) um eine Lagerachse (90) des zweiten hinteren Lagers (88) unbegrenzt schwenkbar ist, wobei eine vom Boden (12) abgewandte Verlängerung der Lagerachse (90) mit der Fortbewegungsrichtung (10) einen spitzen Winkel bildet und die hintere Laufachse (82) von der Lagerachse (90) beabstandet ist.

Es wird vorgeschlagen, dass die Kopplungseinheit (56) zumindest ein Kopplungsmittel (60; 92) zur direkten Kopplung mit dem federelastischen Torsionselement (44; 100) aufweist.

## Beschreibung

Die vorliegende Erfindung betrifft einen Waveboard-Roller nach dem Oberbegriff des Anspruchs 1.

### Stand der Technik

Es sind bereits Waveboard-Roller bekannt, die hintereinander und parallel zu einem Boden angeordnete Standflächen aufweisen, die mittels einer Torsionsfeder miteinander gekoppelt sind. An Unterseiten sind die Standflächen mit zumindest zwei Laufrollen ausgestattet, wobei zumindest die in einer Fortbewegungsrichtung hintere Laufrolle in einer von "waveboards" bekannten Weise gegen eine zum Boden senkrechte Richtung geneigt und schwenkbar gelagert ist. Eine zum Boden im Wesentlichen senkrecht ausgerichtete Lenkstange dient während der Fortbewegung mit dem Waveboard-Roller einer verbesserten Richtungskontrolle.

Die Fortbewegung erfolgt in der von den lenkstangefreien "waveboards" zum Beispiel aus der Druckschrift EP 1 511 541 B1 bekannten Weise dadurch, dass ein Benutzer des Tretrollers durch eine Gewichtsverlagerung auf eine Seite der hinteren Standfläche ein Drehmoment ausübt, durch das die hintere Standfläche um eine Längsachse gedreht wird. Auf die hintere Laufrolle, die durch die Drehung aus einer Ausrichtungslage entlang der Längsachse herausgedreht wird, wirkt in dieser Lage eine antreibende Kraft, so dass der Benutzer des Tretrollers durch einen dauernden Wechsel der Gewichtsverlagerung den Waveboard-Roller beschleunigen kann, ohne sich vom Boden abstoßen zu müssen. Das vom Benutzer ausgeübte Drehmoment wird auf ein Ende der Torsionsfeder, das mit der hinteren Standfläche gekoppelt ist, übertragen und von der Torsionsfeder in ein Torsionsmoment umgewandelt. Einen solchen Waveboard-Roller beschreibt beispielsweise die Druckschrift WO 2010/054054 A1, die auch eine ausführliche Beschreibung der mechanischen Vorgänge der Fortbewegung sowie deren Abhängigkeit von verschiedenen Auslegungsparametern liefert.

Das Torsionsmoment, das sich von dem mit der hinteren Standfläche gekoppelten Ende der Torsionsfeder bis zu einem der vorderen Standfläche zugewandten Ende der Torsionsfeder fortpflanzt, muss mit einem entgegengesetzten Gegentorsionsmoment oder einem entgegengesetzten Gegendrehmoment kompensiert werden. Das Gegentorsionsmoment kann zu einer Torsion der vorderen Standfläche führen, wodurch eine gewünschte, durch das vom Benutzer auf die hintere Standfläche ausgeübte Drehmoment erzeugte Torsionswirkung an der Torsionsfeder verringert wird und als Folge nachteilig eine verringerte Antriebskraft auf die Laufrolle ausgeübt wird.

Der Erfindung liegt daher insbesondere die Aufgabe zugrunde, einen Waveboard-Roller mit einem verbesserten Laufkomfort bereitzustellen.

### Offenbarung der Erfindung

Gegenstand der vorliegenden Erfindung ist ein Waveboard-Roller zur Fortbewegung zumindest einer Person in eine Fortbewegungsrichtung. Der Waveboard-Roller umfasst eine Standflächeneinheit mit einer Längsachse, die in einem Zusammenbauzustand im Wesentlichen parallel zur Fortbewegungsrichtung und in einem Betriebszustand parallel zu einem Boden angeordnet ist. Unter einem "Zusammenbauzustand" soll in diesem Zusammenhang insbesondere ein Zustand verstanden werden, in dem alle Bestandteile des Waveboard-Rollers auslegungsgemäß zusammengebaut und in einer maximal symmetrischen Weise ausgerichtet sind und außer der Schwerkraft keine äußeren Kräfte auf den Waveboard-Roller einwirken. Unter einem "Betriebszustand" soll in diesem Zusammenhang insbesondere zumindest ein Zustand verstanden werden, in dem der Waveboard-Roller im Zusammenbauzustand auf einem Boden angeordnet ist. Die Standflächeneinheit weist zumindest eine in der Fortbewegungsrichtung vordere Plattform und zumindest eine in der Fortbewegungsrichtung hintere Plattform auf, wobei die vordere Plattform und die hintere Plattform im Zusammenbauzustand in der Fortbewegungsrichtung beabstandet angeordnet sind.

Ferner umfasst der Waveboard-Roller eine Torsionseinheit mit zumindest einem federelastischen Torsionselement und zumindest einem Koppelelement, das zur mechanischen Kopplung des Torsionselements mit der hinteren Plattform vorgesehen ist.

Der Waveboard-Roller ist mit einer Lenkstangeneinheit mit einem sich im Wesentlichen quer zur Fortbewegungsrichtung erstreckendem Lenkmittel zu einer Festlegung der Fortbewegungsrichtung und mit einer Kopplungseinheit zur mechanischen Kopplung der Lenkstangeneinheit ausgestattet.

Weiterhin weist der Waveboard-Roller eine Laufrolleneinheit auf mit zumindest einer in der Fortbewegungsrichtung vorderen Laufrolle, die in einem vorderen Lager der Laufrolleneinheit um eine vordere Laufachse drehbar gelagert ist, und mit zumindest einer in der Fortbewegungsrichtung hinteren Laufrolle, die um eine hintere Laufachse drehbar ist.

Der Waveboard-Roller umfasst des Weiteren eine Lagereinheit mit einem ersten hinteren Lager zur Lagerung der hinteren Laufachse und mit einem zweiten hinteren Lager, mittels dessen die hintere Laufrolle um eine Lagerachse des zweiten hinteren Lagers unbegrenzt schwenkbar ist, wobei eine vom Boden abgewandte Verlängerung der Lagerachse mit der Fortbewegungsrichtung einen spitzen Winkel bildet und die hintere Laufachse von der Lagerachse beabstandet ist.

Ferner beinhaltet der Waveboard-Roller eine Kopplungseinheit zur Kopplung der vorderen Plattform mit der Lenkstangeneinheit.

Es wird vorgeschlagen, dass die Kopplungseinheit zumindest ein Kopplungsmittel zur direkten Kopplung mit dem federelastischen Torsionselement aufweist. Unter einer "direkten Kopplung" soll in diesem Zusammenhang insbesondere verstanden werden, dass zwischen dem Kopplungsmittel und der federelastischen Torsionselement, insbesondere im Sinne einer Wirkungsübertragung, kein weiteres Bauteil angeordnet ist.

Dadurch ist ein zur Kompensation des bei einer Fortbewegung des Tretrollers auftretenden und durch das federelastische Torsionselement in ein Torsionsmoment gewandeltes Drehmoments notwendiges Gegendrehmoment mittels der Lenkstangeneinheit mit einer großen Hebellänge in einfacher und effektiver Weise durch den Benutzer und insbesondere ohne eine Torsionsbelastung der vorderen Plattform aufbringbar, die eine vorwärtstreibende Kraftwirkung zur Fortbewegung des Tretrollers durch einen verringerten Torsionswinkel des federelastischen Torsionselements verringern würde. Durch die direkte Kopplung an die Lenkstangeneinheit kann das direkt gekoppelte Ende des federelastischen Torsionselements als feststehend angesehen werden, so dass ein optimaler Torsionswinkel erreicht werden kann. Vorteilhaft kann das federelastische Torsionselement entlang der Längsachse angeordnet sein.

Weiterhin wird vorgeschlagen, dass das zumindest eine Kopplungsmittel zur Übertragung eines Torsionsmoments drehfest mit dem federelastischen Torsionselement gekoppelt ist. Dadurch kann das Torsionsmoment in zuverlässiger Weise an die Lenkstangeneinheit weitergeleitet werden, mittels der durch den Benutzer eine Kompensation durch ein Aufbringen eines Gegendrehmoments durchgeführt werden kann, und eine gewünschte Torsion der hinteren Plattform kann ohne Verluste erfolgen.

In einer vorteilhaften Ausgestaltung ist das Kopplungsmittel zur direkten Kopplung mit dem federelastischen Torsionselement separat von der vorderen Plattform ausgebildet. Dadurch kann die vordere Plattform von einer Übertragung des von dem Benutzer zur Fortbewegung aufgebrachten Torsionsmoments auf die Lenkstangeneinheit ausgenommen werden, so dass Anforderungen an die mechanischen Eigenschaften der vorderen Plattform verringert werden können, ohne dass Verluste bei der vortreibenden Kraft durch eine Torsion der vorderen Plattform entstehen.

Wenn das das federelastische Torsionselement als Torsionsstange ausgebildet ist, kann eine besonders einfache Konstruktion des Torsionselements ermöglicht werden.

In einer vorteilhaften Ausgestaltung besteht die Torsionsstange im Wesentlichen aus einem federelastischen Kunststoff, wodurch Gewicht eingespart werden kann. Unter "im Wesentlichen" soll in diesem Zusammenhang insbesondere verstanden werden, dass die Torsionsstange mindestens zu 60 %, vorteilhaft zu mindestens 70 % und, besonders vorteilhaft, zu mindestens 80 % ihres Volumens aus dem federelastischen Kunststoff besteht.

Zudem wird vorgeschlagen, dass die Kopplungseinheit ein Rohr zur zumindest teilweisen Aufnahme des federelastischen Torsionselements umfasst. Dadurch kann bei geeigneter Ausgestaltung eine besonders kompakte Lösung zur direkten Kopplung mit dem federelastischen Torsionselement bereitgestellt werden.

Wen das federelastische Torsionselement in einer Ebene quer zur Fortbewegungsrichtung einen im Wesentlichen kreisrunden Querschnitt aufweist, ist eine besonders einfache Ausbildung des Torsionselements ermöglicht.

Außerdem wird vorgeschlagen, dass das Kopplungsmittel zumindest ein erstes Formschlusselement aufweist und das federelastische Torsionselement ein zweites, zum ersten Formschlusselement korrespondierendes Formschlusselement aufweist, und dass das erste Formschlusselement und das zweite Formschlusselement dazu vorgesehen sind, im Zusammenbauzustand eine Formschlussverbindung zu bilden, wodurch eine einfache und sichere Übertragung des Torsionsmoments erreicht werden kann.

Wenn eine Einspannlänge des federelastischen Torsionselements zumindest 20 cm beträgt, kann eine größere Auswahl von zu einer Herstellung des Torsionselements geeigneten Konstruktionswerkstoffen mit guten Festigkeitseigenschaften, die ein Benutzer des Tretrollers mit seiner aufgewendeten Kraft tordieren kann, bereitgestellt werden, wodurch bei einer geeigneten Ausgestaltung Gewicht und Kosten eingespart werden können. Unter einer "Einspannlänge" soll in diesem Zusammenhang insbesondere ein Abstand in Richtung der Längsachse zwischen einem Einleitungsort eines wesentlichen Teils des Torsionsmoduls in Torsionselement und einem Ausleitungsort des wesentlichen Teils des Torsionsmoduls aus dem Torsionselement verstanden werden. Unter einem "wesentlichen Teil" des Torsionsmoduls sollen insbesondere mehr als 50 % des von dem Benutzer des Tretrollers aufgebrachten Torsionsmoments verstanden werden.

Wenn eine größte Abmessung der hinteren Plattform in zumindest einer Richtung senkrecht zur Längsachse größer ist als 22 cm, kann bei gleicher von dem Benutzer des Tretrollers aufgebrachten Kraft ein größeres Drehmoment als Torsionsmoment auf das federelastische Torsionselement übertragen werden, wodurch die vorwärtstreibende Kraft auf die hintere Laufrolle vergrößert werden kann.

Ferner wird vorgeschlagen, dass eine größte Abmessung der vorderen Plattform in Richtung der Längsachse mindestens 25 cm beträgt, wodurch auch für Jugendliche und Erwachsene eine sichere Benutzung des Tretrollers gewährleistet werden kann.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Gesamtansicht eines erfindungsgemäßen Waveboard-Rollers,
- Fig. 2: eine Unteransicht des Waveboard-Rollers gemäß der Fig. 1, und
- Fig. 3: ein alternatives Kopplungsmittel der Kopplungseinheit des Waveboard-Rollers gemäß den Figuren 1 und 2 in einer perspektivischen Explosionsansicht.

### Beschreibung der Ausführungsbeispiele

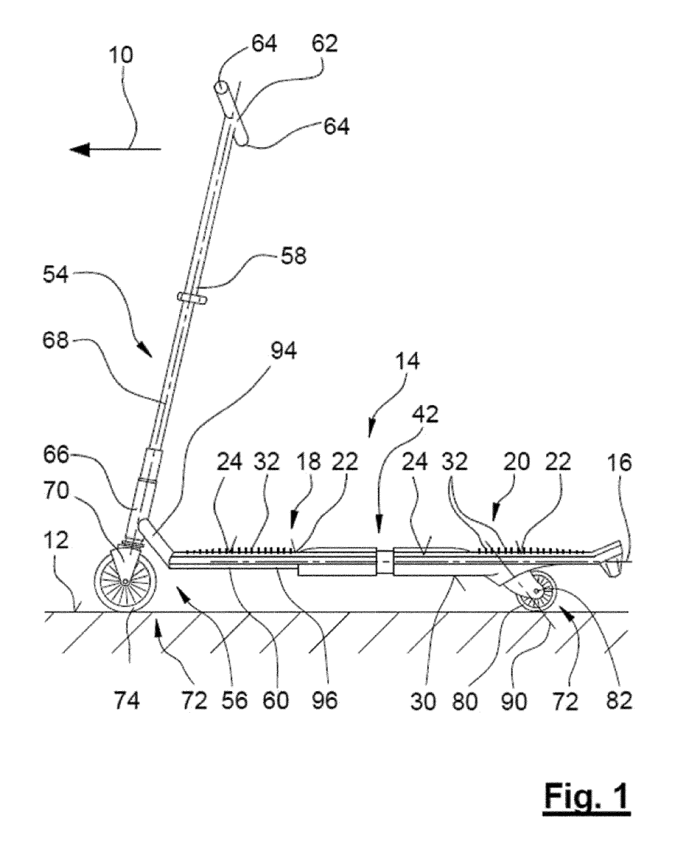

Fig. 1 zeigt einen erfindungsgemäßen Waveboard-Roller in einer Gesamtansicht. Die Ansicht entspricht einem Zusammenbauzustand des Waveboard-Rollers, in dem alle Bestandteile des Waveboard-Rollers auslegungsgemäß zusammengebaut und in einer maximal symmetrischen Weise ausgerichtet sind und außer der Schwerkraft keine äußeren Kräfte auf den Waveboard-Roller einwirken. Der Waveboard-Roller ist zur Fortbewegung einer Person in eine Fortbewegungsrichtung 10 vorgesehen, die in der Ansicht der Fig. 1 von rechts nach links verläuft. Grundsätzlich ist aber auch eine Bewegung des Waveboard-Rollers entgegen der Fortbewegungsrichtung 10 möglich.

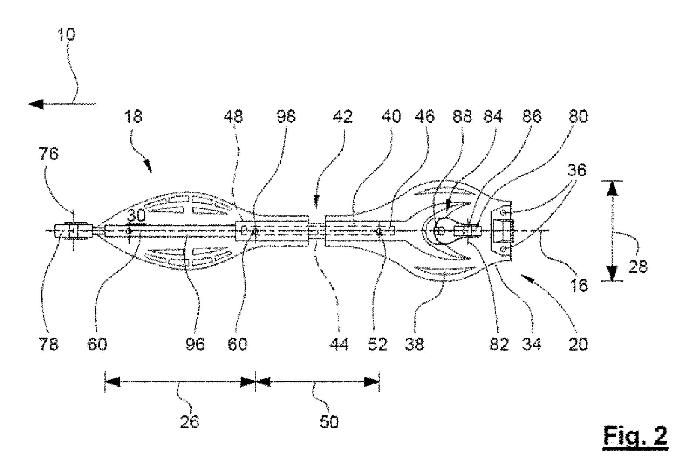

Der Waveboard-Roller weist eine Standflächeneinheit 14 mit einer Längsachse 16 auf, die im Zusammenbauzustand parallel zur Fortbewegungsrichtung 10 angeordnet ist und sich in einem Betriebszustand, in dem der Waveboard-Roller im Zusammenbauzustand auf einem Boden 12 angeordnet ist, parallel zum Boden 12 verläuft. Die Standflächeneinheit 14 umfasst eine in der Fortbewegungsrichtung 10 vordere Plattform 18 und eine in der Fortbewegungsrichtung 10 hintere Plattform 20, wobei die vordere Plattform 18 und die hintere Plattform 20 im Zusammenbauzustand in der Fortbewegungsrichtung 10 beabstandet angeordnet sind. Die vordere Plattform 18 und die hintere Plattform 20 sind im Spritzgussverfahren aus einem Kunststoffmaterial hergestellt und weisen jeweils an einer dem Boden 12 im Betriebszustand abgewandten und zu dem Boden 12 parallel verlaufenden Oberseite 24 über eine Standfläche 22 der Plattform 18, 20 verteilte, aus der Standfläche 22 herausragende und einstückig an die vordere Plattform 18 und die hintere Plattform 20 angeformte Fortsätze 32 auf, die einer verbesserten Haftreibung zwischen den Oberseiten 24 der vorderen Plattform 18 und der hinteren Plattform 20 und einer Sohle eines Benutzers dienen. Durch eine größte Abmessung 26 (Fig. 2) der vorderen Plattform 18 in Richtung der Längsachse 16 von mehr als 25 cm ist eine ausreichend große Standfläche auch für jugendliche und erwachsene Benutzer bereitgestellt. Wie am besten aus der Fig. 2 ersichtlich, ist die hintere Plattform 20 an einem in der Fortbewegungsrichtung 10 hinteren Ende 34 mit zwei quer zur Längsachse 16 beabstandeten, an einem hinteren Ende profilierten Reibeklötzen 36 ausgestattet, die im Falle einer Notbremsung durch den Benutzer gegen den Boden 12 anlegbar sind, um den Waveboard-Roller aus einem Zustand der Fortbewegung zum Stillstand zu bringen.

Des Weiteren weist der Waveboard-Roller eine Torsionseinheit 42 auf, die im Betriebszustand im Wesentlichen zwischen einer Ebene, die die Standflächen 22 der vorderen Plattform 18 und der hinteren Plattform 20 einschließt, und dem Boden 12 parallel zur Längsachse 16 angeordnet ist. Die Torsionseinheit 42 umfasst ein vollständig aus einem federelastischen, glasfaserverstärkten Kunststoff gefertigtes Torsionselement 44, das als zylindrische Torsionsstange ausgebildet ist, die in einer quer zur Fortbewegungsrichtung 10 angeordneten Ebene einen kreisrunden Querschnitt aufweist. Im Zusammenbauzustand ist die Torsionsstange mit einem in der Fortbewegungsrichtung 10 hinteren Ende 46 in einem Hohlraum 40 geführt, der von der hinteren Plattform 20 und einer im Betriebszustand an einer dem Boden 12 zugewandten Unterseite 30 mit von Schrauben gebildeten Befestigungsmitteln lösbar fest angebrachten Abdeckung 38 gebildet ist (Fig. 2). Die Torsionseinheit 42 weist zur mechanischen Kopplung des federelastischen Torsionselements 44 mit der hinteren Plattform 20 ferner ein von einer Schraube gebildetes Koppelelement 52 auf. Die Schraube ist von der Unterseite 30 der hinteren Plattform 20 montierbar und durchdringt in einer Richtung quer zur Längsachse 16 die Abdeckung 38 und das Torsionselement 44 durch dazu vorgesehene Ausnehmungen und ist in der hinteren Plattform 20 durch Kraftschluss gehalten. Auf diese Weise sind die hintere Plattform 20 und das in der Fortbewegungsrichtung 10 hintere Ende 46 des Torsionselements 44 drehfest miteinander verbunden.

An einem in der Fortbewegungsrichtung 10 vorderen Bereich weist der Waveboard-Roller eine Lenkstangeneinheit 54 auf (Fig. 1). Die Lenkstangeneinheit 54 umfasst im Bereich eines im Betriebszustand bodennahen Endes eine Kopplungseinheit 56 zur mechanischen Kopplung und ein sich im Zusammenbauzustand im Wesentlichen quer zur Fortbewegungsrichtung 10 erstreckendes, von einer Lenkstange gebildetes Lenkmittel 58 mit einer an einem im Betriebszustand bodenfernen Ende angebrachten Querstange 62, die an beiden Enden mit Handgriffen 64 als Haltemittel für den Benutzer ausgestattet ist. Die Kopplungseinheit 56 beinhaltet ein nicht näher dargestelltes Steuerrohr 66 mit einem als Steuersatz ausgebildetem Lagermittel, mit dem die Lenkstange in beliebiger Weise um eine Längsachse 68 drehbar gelagert ist. An einem bodennahen Ende weist die Lenkstange eine Gabel 70 zur Aufnahme einer vorderen Laufrolle 74 auf.

Die vordere Laufrolle 74 ist Teil einer Laufrolleneinheit 72 des Waveboard-Rollers und in einem vorderen Lager 78 der Laufrolleneinheit 72 (Fig. 2) um eine vordere Laufachse 76 drehbar gelagert, die im Betriebszustand parallel zum Boden 12 verläuft. Die Laufrolleneinheit 72 umfasst ferner eine in der Fortbewegungsrichtung 10 hintere Laufrolle 80, die um eine hintere Laufachse 82 drehbar ist.

Zur Lagerung der hinteren Laufachse 82 weist der Waveboard-Roller eine Lagereinheit 84 auf, die zu diesem Zweck mit einem ersten hinteren Lager 86 ausgestattet ist, dessen Lagerachse mit der hinteren Laufachse 82 übereinstimmt. Weiterhin weist die Lagereinheit 84 ein zweites hinteres Lager 88 auf, mittels dessen die hintere Laufrolle 80 um eine Lagerachse 90 des zweiten hinteren Lagers 88 unbegrenzt schwenkbar ist (Fig. 1). Eine vom Boden 12 abgewandte Verlängerung der Lagerachse 90 des zweiten hinteren Lagers 88 bildet mit der Fortbewegungsrichtung 10 einen spitzen Winkel. Die hintere Laufachse 82 ist von der Lagerachse 90 beabstandet angeordnet. Im Betriebszustand liegen die vordere Laufrolle 74 und die hintere Laufrolle 80 auf dem Boden 12 auf.

Die Kopplungseinheit 56 der Lenkstangeneinheit 54 weist ein Kopplungsmittel 60 zur direkten Kopplung mit dem federelastischen Torsionselement 44 auf. Das Kopplungsmittel 60 ist von einem an einem Ende in einem stumpfen Winkel abgewinkelten Metallrohr und einer Schraube 98 gebildet. An einem Ende eines kurzen Schenkel 94 des Winkels ist das Metallrohr mittels eines durch ein Schweißverfahren hergestellten Stoffschlusses mit dem Steuerrohr 66 fest verbunden. Ein langer Schenkel 96 des von dem Metallrohr gebildeten Winkels erstreckt sich im Zusammenbauzustand im Wesentlichen parallel zur Längsachse 16 und entgegen der Fortbewegungsrichtung 10 entlang der Unterseite 30 der vorderen Plattform 18 und ist im Zusammenbauzustand zur Aufnahme eines in der Fortbewegungsrichtung 10 vorderen Endes 48 des federelastischen Torsionselements 44 vorgesehen (Fig. 2). Die Schraube 98, die von der Unterseite 30 der vorderen Plattform 18 montierbar ist, durchdringt in der Richtung quer zur Längsachse 16 das Metallrohr und das vordere Ende 48 des Torsionselements 44 durch dazu vorgesehene Ausnehmungen und ist im vorderen Ende 48 des Torsionselements 44 durch Kraftschluss gehalten, so dass das von dem Metallrohr und der Schraube 98 gebildete Kopplungsmittel 60 zur Übertragung eines Torsionsmoments drehfest mit dem federelastischen Torsionselement 44 gekoppelt ist.

Eine Einspannlänge 50 des federelastischen Torsionselements 44 zwischen dem Koppelelement 52 der hinteren Plattform 20 und der Schraube 98 durch das vordere Ende 48 des Torsionselements 44 beträgt mehr als 20 cm, so dass einerseits eine ausreiche Stabilität des Waveboard-Rollers gewährleistet ist, und andererseits eine ausreichend große Drehung der hinteren Plattform 20 um die Längsachse 16 durch eine vom Benutzer bequem aufbringbare Kraftwirkung erreicht werden kann.

Zur Fortbewegung mit dem Waveboard-Roller verlagert der Benutzer in bekannter Weise seine Stellung und damit sein Gewicht auf der Standflächeneinheit 14, um auf die hintere Plattform 20 ein Drehmoment auszuüben, das die hintere Plattform 20 um die Längsachse 16 dreht (physikalisch gesehen ist das Drehmoment parallel zur Längsachse 16 gerichtet). Die Drehung der hinteren Plattform 20 erzeugt in einer einem Fachmann bekannten Weise eine Auslenkung der hinteren Laufrolle 80 und eine vorwärts treibende Kraft an derselben. Eine größte Abmessung 28 der hinteren Plattform 20 in einer Richtung senkrecht zur Längsachse 16 von mehr als 22 cm ermöglicht eine Ausübung eines zur Fortbewegung ausreichend großen Drehmoments bei einer vergleichsweise geringen aufzuwendenden Kraft des Benutzers, so dass auch ein Kind in der Lage ist, diese Kraft zu erzeugen, und die jugendlichen oder erwachsenen Benutzer den durch die Abmessung 28 der hinteren Plattform 20 aufzuwendenden geringen Kraftaufwand als erhöhten Komfort empfinden.

Die Drehung der hinteren Plattform 20 um die Längsachse 16 ist durch die mechanische Kopplung mit dem federelastischen Torsionselements 44 ermöglicht. Zur Kompensation des vom Benutzer angewendeten Drehmoments entsteht am hinteren Ende 46 des Torsionselements 44 ein Gegendrehmoment, das vom Torsionselement 44 als ein Torsionsmoment zu dem der hinteren Plattform 20 abgewandeten vorderen Ende 48 des Torsionselements 44 weitergeleitet wird. Durch die drehfeste Kopplung des vorderen Endes 48 des Torsionselements 44 wirkt aufgrund des Torsionsmoments auf das von dem Metallrohr gebildete Kopplungsmittel der Kopplungseinheit 56 ein Drehmoment, das die Lenkstangeneinheit 54 um die Längsachse 16 zu drehen sucht. Dieses Drehmoment ist wiederum von einem Gegendrehmoment zu kompensieren, das der Benutzer aufgrund einer im Vergleich zu einer Breite der hinteren Plattform 20 relativ größeren Hebellänge der Lenkstange mit einer geringen Kraftausübung an den Handgriffen 64 aufbringen kann, was vom Benutzer als sehr komfortabel empfunden wird.

Da das Kopplungsmittel 60 zur direkten Kopplung mit dem federelastischen Torsionselement 44 separat von der vorderen Plattform 18 ausgebildet ist, wird eine kräftemäßige Belastung der vorderen Plattform 18 durch das vom Benutzer aufgewendete Drehmoment vorteilhaft vermieden, wodurch sich Auslegungsanforderungen an die vordere Plattform hinsichtlich einer Verwindungssteifigkeit reduzieren. Insbesondere bleibt die vorwärts treibende Kraft auf die hintere Laufrolle 80 durch den unverminderten Torsionswinkel der hinteren Plattform 20 in voller Höhe erhalten, wodurch sich insgesamt ein Fahrkomfort für den Benutzer erhöht.

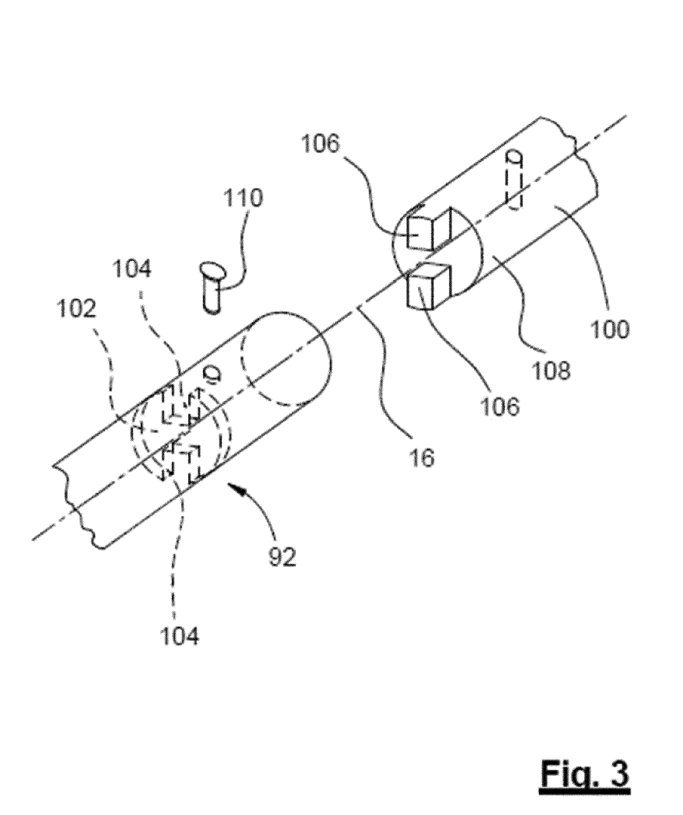

In der Fig. 3 ist ein alternatives Kopplungsmittel 92 der Kopplungseinheit 56 des Waveboard-Rollers der ersten Ausführung gemäß den Figuren 1 und 2 zur direkten Kopplung mit einem alternativen federelastischen Torsionselement 100 in einer Explosionsdarstellung gezeigt. Das Kopplungsmittel 92 umfasst ein Metallrohr und ein in einem Inneren des Metallrohres durch eine Schweißverbindung ortsfest angebrachtes Blechteil 102 mit zwei ersten Formschlusselementen 104 auf, die von randnahen, quadratischen, sich in Bezug auf die Längsachse 16 gegenüberliegenden Aussparungen gebildet sind. Das federelastische Torsionselement 100 weist zwei zu den beiden ersten Formschlusselementen 104 korrespondierende zweite Formschlusselemente 106 auf, die von würfelförmigen Fortsätzen gebildet sind, die einstückig an einem vorderen Ende 108 des Torsionselements 100 angeformt sind. Die ersten Formschlusselemente 104 und die zweiten Formschlusselemente 106 sind dazu vorgesehen, in einem Zusammenbauzustand eine Formschlussverbindung zu bilden, durch die ein Torsionsmoment zuverlässig übertragbar ist. Durch einen Bolzen 110, der in Richtung der Längsachse 16 beabstandet vom vorderen Ende 108 des Torsionselements 100 angeordnet ist, das Metallrohr durch eine dafür vorgesehen Ausnehmung in einer Richtung quer zur Längsachse 16 durchdringt und im Zusammenbauzustand in das Torsionselement 100 teilweise hineinragt, ist eine sichere Verbindung während einer Benutzung des Waveboard-Rollers gewährleistet.

### Bezugszeichenliste

- 10: Fortbewegungsrichtung
- 12: Boden
- 14: Standflächeneinheit
- 16: Längsachse
- 18: Plattform
- 20: Plattform
- 22: Standfläche
- 24: Oberseite
- 26: Abmessung
- 28: Abmessung
- 30: Unterseite
- 32: Fortsatz
- 34: Ende
- 36: Reibklotz
- 38: Abdeckung
- 40: Hohlraum
- 42: Torsionseinheit
- 44: Torsionselement
- 46: Ende
- 48: Ende
- 50: Einspannlänge
- 52: Koppelelement
- 54: Lenkstangeneinheit
- 56: Kopplungseinheit
- 58: Lenkmittel
- 60: Kopplungsmittel
- 62: Querstange
- 64: Handgriff
- 66: Steuerrohr
- 68: Längsachse
- 70: Gabel
- 72: Laufrolleneinheit

- 74: Laufrolle
- 76: Laufachse
- 78: Lager
- 80: Laufrolle
- 82: Laufachse
- 84: Lagereinheit
- 86: Lager
- 88: Lager
- 90: Lagerachse
- 92: Kopplungsmittel
- 94: kurzer Schenkel
- 96: langer Schenkel
- 98: Schraube
- 100: Torsionselement
- 102: Blechteil
- 104: Formschlusselement
- 106: Formschlusselement
- 108: Ende
- 110: Bolzen

## Patentansprüche

1. Waveboard-Roller zur Fortbewegung zumindest einer Person in eine Fortbewegungsrichtung (10), umfassend:
- eine Standflächeneinheit (14) mit einer Längsachse (16), die in einem Zusammenbauzustand im Wesentlichen parallel zur Fortbewegungsrichtung (10) und in einem Betriebszustand parallel zu einem Boden (12) angeordnet ist, und mit zumindest einer in der Fortbewegungsrichtung (10) vorderen Plattform (18) und zumindest einer in der Fortbewegungsrichtung (10) hinteren Plattform (20), wobei die vordere Plattform (18) und die hintere Plattform (20) im Zusammenbauzustand in der Fortbewegungsrichtung (10) beabstandet angeordnet sind,
- eine Torsionseinheit (42) mit zumindest einem federelastischen Torsionselement (44; 100) und zumindest einem Koppelelement (52), das zur mechanischen Kopplung des federelastischen Torsionselements (44; 100) mit der hinteren Plattform (20) vorgesehen ist,
- eine Lenkstangeneinheit (54) mit einem sich im Wesentlichen quer zur Fortbewegungsrichtung (10) erstreckendem Lenkmittel (58) zu einer Festlegung der Fortbewegungsrichtung (10),
- eine Kopplungseinheit (56) zur mechanischen Kopplung der Lenkstangeneinheit (54),
- eine Laufrolleneinheit (72) mit zumindest einer in der Fortbewegungsrichtung (10) vorderen Laufrolle (74), die in einem vorderen Lager (78) der Laufrolleneinheit (72) um eine vordere Laufachse (76) drehbar gelagert ist, und zumindest einer in der Fortbewegungsrichtung (10) hinteren Laufrolle (80), die um eine hintere Laufachse (82) drehbar ist,
- eine Lagereinheit (84) mit einem ersten hinteren Lager (86) zur Lagerung der hinteren Laufachse (82) und mit einem zweiten hinteren Lager (88), mittels dessen die hintere Laufrolle (80) um eine Lagerachse (90) des zweiten hinteren Lagers (88) unbegrenzt schwenkbar ist, wobei eine vom Boden (12) abgewandte Verlängerung der Lagerachse (90) mit der Fortbewegungsrichtung (10) einen spitzen Winkel bildet und die hintere Laufachse (82) von der Lagerachse (90) beabstandet ist,
**dadurch gekennzeichnet, dass** die Kopplungseinheit (56) zumindest ein Kopplungsmittel (60; 92) zur direkten Kopplung mit dem federelastischen Torsionselement (44; 100) aufweist.

2. Waveboard-Roller nach Anspruch 1, **dadurch gekennzeichnet, dass** das zumindest eine Kopplungsmittel (60; 92) zur Übertragung eines Torsionsmoments drehfest mit dem federelastischen Torsionselement (44; 100) gekoppelt ist.

3. Waveboard-Roller nach Anspruch 1 oder 2, **dadurch gekennzeichnet, dass** das Kopplungsmittel (60; 92) zur direkten Kopplung mit dem federelastischen Torsionselement (44; 100) separat von der vorderen Plattform (18) ausgebildet ist.

4. Waveboard-Roller nach einem der vorhergehenden Ansprüche, **dadurch gekennzeichnet, dass** das federelastische Torsionselement (44; 100) als Torsionsstange ausgebildet ist.

5. Waveboard-Roller nach Anspruch 4, **dadurch gekennzeichnet, dass** die Torsionsstange im Wesentlichen aus einem federelastischen Kunststoff besteht.

6. Waveboard-Roller nach einem der vorhergehenden Ansprüche, **dadurch gekennzeichnet, dass** die Kopplungseinheit (56) ein Rohr zur zumindest teilweisen Aufnahme des federelastischen Torsionselements (44; 100) umfasst.

7. Waveboard-Roller nach einem der vorhergehenden Ansprüche, **dadurch gekennzeichnet, dass** das federelastische Torsionselement (44; 100) in einer quer zur Fortbewegungsrichtung (10) angeordneten Ebene einen im Wesentlichen kreisrunden Querschnitt aufweist.

8. Waveboard-Roller nach einem der vorhergehenden Ansprüche, **dadurch gekennzeichnet, dass** das Kopplungsmittel (60; 92) zumindest ein erstes Formschlusselement (104) aufweist und das federelastische Torsionselement (44; 100) ein zum ersten Formschlusselement (104) korrespondierendes, zweites Formschlusselement (106) aufweist und das erste Formschlusselement (104) und das zweite Formschlusselement (106) dazu vorgesehen sind, in einem Zusammenbauzustand zur Übertragung eines Torsionsmoments eine Formschlussverbindung zu bilden.

9. Waveboard-Roller nach einem der vorhergehenden Ansprüche, **dadurch gekennzeichnet, dass** eine Einspannlänge (50) des federelastischen Torsionselements (44; 100) zumindest 20 cm beträgt.

10. Waveboard-Roller nach einem der vorhergehenden Ansprüche, **dadurch gekennzeichnet, dass** eine größte Abmessung (28) der hinteren Plattform (20) in zumindest einer Richtung senkrecht zur Längsachse (16) größer ist als 22 cm.

11. Waveboard-Roller nach einem der vorhergehenden Ansprüche, **dadurch gekennzeichnet, dass** eine größte Abmessung (26) der vorderen Plattform (18) in Richtung der Längsachse (16) größer ist als 25 cm.
